(19) Europäisches Patentamt
European Patent Office
Office européen des brevets

(11) **EP 4 125 227 A1**

(12) **DEMANDE DE BREVET EUROPEEN**

(43) Date de publication:
**01.02.2023 Bulletin 2023/05**

(21) Numéro de dépôt: **22187326.8**

(22) Date de dépôt: **27.07.2022**

(51) Classification Internationale des Brevets (IPC):
*H04B 7/06* (2006.01)   *H04B 7/0408* (2017.01)
*H04B 1/04* (2006.01)   *H01Q 23/00* (2006.01)
*H01Q 3/34* (2006.01)

(52) Classification Coopérative des Brevets (CPC):
**H04B 7/0617; H04B 1/0483; H04B 7/0408**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **29.07.2021 FR 2108241**

(71) Demandeur: **THALES**
**92400 Courbevoie (FR)**

(72) Inventeurs:
• **GARREC, Patrick**
**33701 MERIGNAC Cedex (FR)**
• **MAZEAU, Thierry**
**33701 MERIGNAC CEDEX (FR)**

(74) Mandataire: **Atout PI Laplace**
**Immeuble "Visium"**
**22, avenue Aristide Briand**
**94117 Arcueil Cedex (FR)**

(54) **ANTENNE RESEAU**

(57)   Antenne réseau (A) comprenant un réseau d'éléments rayonnants ($E_m$) composé de M éléments rayonnants, M étant un entier supérieur à 1, comprenant chacun un port d'excitation ($P_m$), l'antenne réseau (A) comprenant un générateur (G1) configuré et couplé aux M ports d'excitation de façon à permettre d'exciter simultanément les éléments rayonnants ($E_m$) en les M ports d'excitation ($P_m$) par M signaux d'excitation respectifs, chacun des M signaux d'excitation étant la somme de N signaux élémentaires de porteuses respectives sinusoïdales de fréquences respectives distinctes, N étant un entier supérieur à 1, présentant chacun une phase réglable de façon que l'antenne réseau (A) rayonne simultanément N faisceaux aux fréquences respectives.

[Fig. 2]

**Description**

L'invention se situe dans le domaine des antennes réseau comprenant un réseau d'éléments rayonnants unitaires.

L'invention s'applique aux antennes radiofréquences, notamment, aux antennes hyperfréquences. De telles antennes peuvent être utilisées dans différentes applications telles que les applications radar dans l'avionique et l'aérospatiale, la communication haut-débit, les balises et les technologies spatiales.

Elle concerne, notamment, les radars à antennes actives aussi appelés AESA (acronyme de l'expression anglo-saxonne « Active Electronically Scanned Array ») et les antennes à entrées et sorties multiples aussi appelées MIMO en référence à l'expression anglo-saxonne « Multiple-Input Multiple-Output ».

Les radars actuels sont aptes à traiter à un instant donné, les signaux reçus à une unique fréquence.

Il existe un besoin de rayonner plusieurs faisceaux simultanément à des fréquences distinctes.

Un but de la présente invention est de proposer une antenne apte à rayonner simultanément plusieurs faisceaux à des fréquences respectives distinctes.

A cet effet, l'invention a pour objet une antenne réseau comprenant un réseau d'éléments rayonnants composé de M éléments rayonnants, M étant un entier supérieur à 1, comprenant chacun un port d'excitation, l'antenne réseau comprenant un générateur configuré et couplé aux M ports d'excitation de façon à permettre d'exciter simultanément les éléments rayonnants en les M ports d'excitation par M signaux d'excitation respectifs, chacun des M signaux d'excitation étant la somme de N signaux élémentaires de porteuses respectives sinusoïdales de fréquences respectives distinctes, N étant un entier supérieur à 1, présentant chacun une phase réglable, de façon que l'antenne réseau rayonne simultanément N faisceaux aux fréquences respectives.

Dans une première réalisation, l'antenne comprend une voie comprenant N générateurs de forme d'onde, chaque générateur de forme d'onde étant configuré pour générer un des N signaux élémentaires composant le signal d'excitation, le générateur individuel à sommateur comprenant un sommateur configuré pour faire la somme des N signaux élémentaires délivrés par les générateurs de formes d'onde de sorte à délivrer le signal d'excitation.

Dans un premier exemple, les générateurs de formes d'ondes comprennent des amplificateurs et des déphaseurs.

Dans un deuxième exemple, les générateurs de formes d'ondes comprennent des synthétiseurs numériques directs élémentaires, chaque synthétiseur numérique direct élémentaire étant configuré pour générer des échantillons d'un des N signaux élémentaires composant le signal d'excitation.

Avantageusement, l'antenne comprend M voies comprenant chacune N générateurs de forme d'onde, les M voies étant couplées aux M ports d'excitation respectifs de façon à permettre d'exciter le M port d'excitation par les M signaux d'excitation respectifs.

Dans une deuxième réalisation, l'antenne comprend un synthétiseur numérique direct configuré pour générer des échantillons du signal d'excitation.

L'invention se rapporte également à un procédé de génération de N faisceaux à N fréquences respectives distinctes à partir d'une antenne réseau comprenant un réseau comprenant M éléments rayonnants, M étant un entier supérieur à 1, le procédé comprenant l'étape suivante:

- exciter les M éléments rayonnants en les M ports d'excitation par M signaux d'excitation respectifs, chacun des M signaux d'excitation étant la somme de N signaux élémentaires ayant des porteuses respectives de fréquences respectives distinctes, N étant un entier supérieur à 1, présentant chacun une phase réglable de façon que l'antenne réseau rayonne simultanément les N faisceaux aux fréquences respectives.

Dans un premier mode de réalisation, le procédé comprend une étape consistant à générer un des M signaux d'excitation, ladite étape comprenant les étapes suivantes :

- générer les N signaux élémentaires,
- faire la somme des N signaux élémentaires de façon à obtenir le signal d'excitation.

Dans un deuxième mode de réalisation, le procédé comprend une étape consistant à générer un des M signaux d'excitation, ladite étape comprenant l'étape suivante :

- générer des échantillons du signal d'excitation par synthèse numérique directe.

La génération simultanée de plusieurs faisceaux à des fréquences distinctes permet de réaliser un radar présentant un large champ de détection et une longue portée ou de balayer l'espace aérien rapidement avec une grande discrétion par rapport à un radar mono-faisceau. En comparaison avec un radar mono fréquence, cette solution permet d'augmenter la durée des temps d'éclairements pour un temps de rafraichissement identique, et par conséquent, d'améliorer la résolution fréquentielle du radar et donc les résolutions distance et angulaire.

La génération simultanée de plusieurs faisceaux à des fréquences distinctes permet au radar de travailler simultanément avec des vitesses de balayages différentes et des modes différents.

Un radar aéroporté peut ainsi travailler dans des contextes air/sol, air/mer, air/air simultanément, par exemple pour faire du SAR ou de l'ISAR et de la poursuite.

Similairement, un radar sol ou mer peut travailler dans des contextes sol/sol, sol/air, sol/mer ou mer/mer, mer/sol, mer/air simultanément.

Les radars peuvent aussi perturber les systèmes de guerre électronique en éclairant des zones qui n'ont pas d'intérêt avec des balayages différents que ceux qui sont utilisés pour explorer ou traiter les zones d'intérêts, par exemple en balayant à contre sens du faisceau utile.

D'autres caractéristiques, détails et avantages de l'invention ressortiront à la lecture de la description faite en référence aux dessins annexés donnés à titre d'exemple et qui représentent, respectivement :

[Fig.1] illustre de façon schématique une antenne selon l'invention,

[Fig.2] illustre schématiquement un premier exemple de voie d'excitation d'un générateur de signaux d'excitation,

[Fig.3] illustre schématiquement un deuxième exemple de voie d'excitation d'une antenne selon l'invention,

D'une figure à l'autre les mêmes éléments sont repérés par les mêmes références.

L'invention se situe dans le domaine des antennes réseau ayant un réseau de M éléments rayonnants. L'antenne peut comprendre uniquement ces M éléments rayonnants ou le réseau d'éléments rayonnants peut être un sous-réseau d'un plus grand réseau d'éléments rayonnants de l'antenne.

L'invention se rapporte notamment aux antennes actives ou AESA et aux antennes MIMO.

L'antenne peut être une antenne réseau plane, par exemple imprimée, c'est-à-dire, comprenant un ensemble d'éléments rayonnants unitaires de type pavés microruban (aussi appelés patch microstrip) ou une antenne réseau plane à fente à cavité aussi appelée « cavity back slot antenna » en terminologie anglo-saxonne, antenne à guide d'onde intégré au substrat aussi appelée antennes SIW (acronyme de l'expression « Substrate integrated waveguide) ou un réseau d'anneaux.

L'invention s'applique également aux antennes non planaires, comme par exemple, les antennes à cornet, les antennes Vivaldi, les dipôles coaxiaux, ouvertures de guides d'ondes et les résonateurs diélectriques).

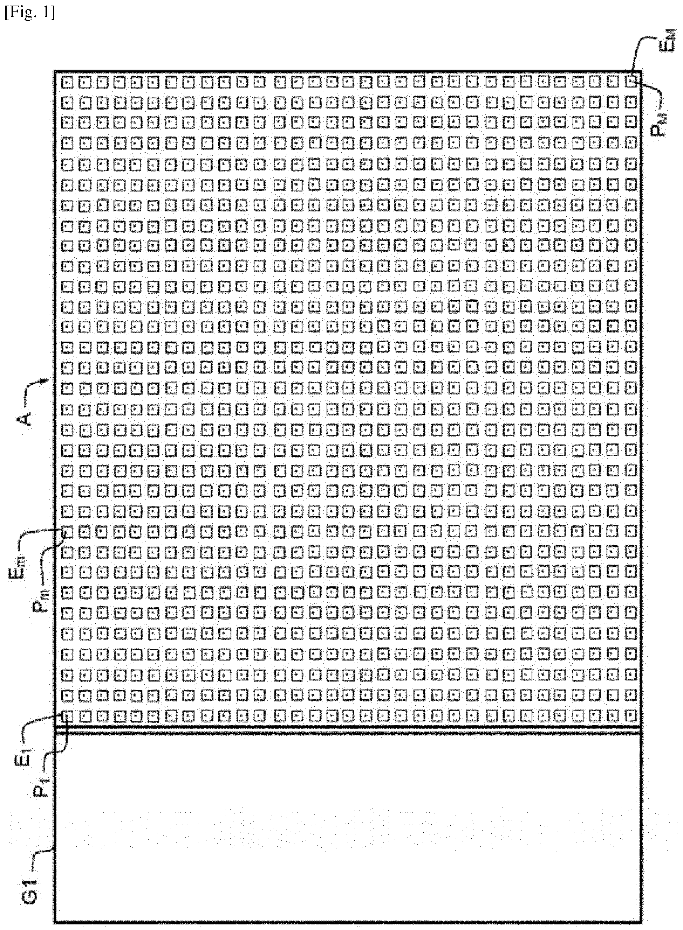

Dans l'exemple non limitatif de la figure 1, l'antenne A comprend un réseau de M éléments rayonnants $E_m$ sensiblement plans, avec m= 1 à M, s'étendant sensiblement dans le plan de la figure 1. M est un entier supérieur à 1.

Chacun des M éléments rayonnants $E_m$ comprend un port d'excitation $P_m$ formant un réseau de M ports d'excitation, avec m = 1 à M, dont trois uniquement sont référencés sur la figure 1, et étant, par exemple mais non nécessairement, au centre de l'élément rayonnant correspondant.

Chacun des éléments rayonnants peut comprendre un unique port d'excitation mais peut aussi comprendre un ou plusieurs ports d'excitation.

Comme visible sur la figure 1, l'antenne A selon l'invention comprend un générateur de signaux d'excitation G1.

Ce générateur G1 est couplé aux M éléments rayonnants $E_m$ de façon à permettre d'exciter les M éléments rayonnants $E_m$ en les M ports d'excitation $P_m$.

Le générateur G1 est couplé à chaque port d'excitation $P_m$ de façon à permettre d'exciter le port d'excitation P correspondant en mode commun, le port d'excitation comprend alors un unique point d'excitation comme représenté en figure 1, ou en mode différentiel, le port d'excitation comprend alors deux points d'excitation.

Le générateur G1 est configuré pour générer simultanément M signaux d'excitation et est couplé au M ports d'excitation $P_m$ de façon à exciter simultanément les M éléments rayonnants $E_m$ en les M ports d'excitation $P_m$ respectifs par les M signaux d'excitation respectifs.

Chaque signal d'excitation est la somme de N signaux élémentaires.

Chaque signal élémentaire module un signal obtenu par modulation en amplitude et/ou en fréquence d'une porteuse sinusoïdale à une fréquence donnée par un signal élémentaire d'entrée.

Chaque signal élémentaire présente donc une porteuse à une fréquence donnée.

Les N signaux élémentaires présentent des porteuses de N fréquences respectives distinctes présentant chacun une phase réglable de façon que l'antenne soit apte à rayonner simultanément N faisceaux aux fréquences respectives, selon des directions respectives réglables pouvant être identiques ou différentes.

Le radar est, par exemple, un radar impulsionnel de tel sort que le générateur G1 excite chacun des éléments rayonnants $E_m$ par une impulsion formée du signal d'excitation correspondant.

Cela permet d'émettre simultanément plusieurs faisceaux dans la même direction ou dans différentes directions.

Lorsque les faisceaux sont émis selon des directions différentes, le champ de détection du radar est élargi sans que la portée du radar ne soit diminuée ce qui n'est pas le cas lorsque des faisceaux sont formés par le calcul à la réception. Cette solution permet notamment de leurrer plus facilement un système de guerre électronique en émettant deux faisceaux selon deux directions différentes à des fréquences distinctes ou de caractériser un secteur d'observation par plusieurs fréquences.

Ainsi, le générateur G1 comprend M voies d'excitation $V_m$, avec m= 1 à M, couplées aux M éléments rayonnants respectifs de façon à permettre de les exciter par les M signaux d'excitation respectifs. Chacune de M voies d'excitation $V_m$ est couplée à un des M éléments rayonnants $E_m$ de façon à permettre d'exciter l'élément rayonnant par le signal d'excitation $S_m(t)$ correspondant au niveau du port d'excitation $P_m$ de l'élément rayonnant $E_m$.

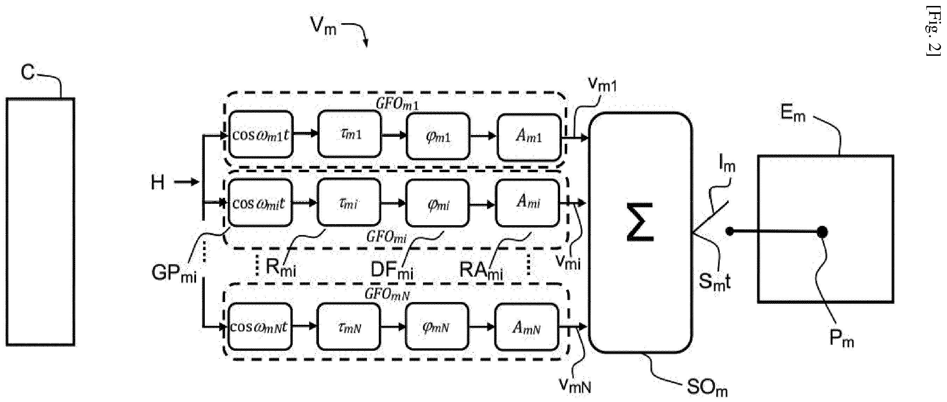

Sur la figure 2, on a représenté un exemple d'une voie $V_m$ du générateur G1 couplée à un des éléments rayonnants $E_m$ au port d'excitation $P_m$.

Dans cet exemple non limitatif, chaque signal élémentaire est une porteuse.

Chaque voie d'émission $V_m$ génère un signal d'excitation donné par la formule suivante :

$$S_m(t) = \sum_{i=1}^{i=N} v_{mi}(t) = \sum_{i=1}^{i=N} A_{mi} e^{i\omega_{i}*(t-\tau_{mi})+\varphi_{mi}}$$

Ce signal d'excitation $S_m(t)$ est donc la somme de N signaux élémentaires qui sont sinusoïdaux $v_{mi}(t)$ présentant chacun une phase $\varphi_{mi}$, une amplitude $A_{mi}$, et un retard $\tau_{mi}$ de fréquences $F_i$ respectives avec $F_i = 2 * \pi * \omega_i$. Les N fréquences $F_i$ avec i=1 à N sont distinctes.

Chaque signal élémentaire $v_{mi}(t)$ de fréquence $F_i$ participe à la génération d'un des N faisceaux.

Chaque faisceau d'ordre i est généré par les M signaux sinusoïdaux d'ordre i $v_{mi}(t)$ avec m= 1 à M d'excitation des M éléments rayonnants $E_m$.

De façon classique pour l'homme du métier, la direction du faisceau d'ordre i émis à la fréquence $F_i$ est définie par les phases $\varphi_{mi}$ attribuées aux M signaux $v_{mi}(t)$ de fréquence $F_i$.

Le générateur G1 comprend de préférence, mais non nécessairement, M voies d'excitation $V_m$ identiques.

La voie $V_m$ comprend N générateurs de formes d'ondes $GFO_{mi}$ avec i = 1 à N configurés pour générer les signaux élémentaires $v_{mi}(t)$ respectifs.

Chaque générateur de forme d'onde $GFO_{mi}$ est configuré pour générer un des N signaux élémentaires $v_{mi}(t)$. Autrement dit, les générateurs de forme d'onde forment chacun un canal générant un signal à une fréquence unique.

Le générateur G1 comprend en outre un sommateur $SO_m$ recevant en entrée les sorties de N générateurs de forme d'onde $GFO_{mi}$ qui sont N signaux élémentaires $v_{mi}(t)$. et configuré pour sommer les N signaux élémentaires $v_{mi}(t)$. de façon à délivrer en sortie la somme des N signaux élémentaires, c'est-à-dire le signal d'excitation $S_m(t)$.

Dans l'exemple de la figure 2, chaque générateur de forme d'onde $GFO_{mi}$ est configuré pour générer une onde de fréquence $F_i$ prédéterminée réglable correspondant à une des fréquences prédéterminées, ayant une phase prédéterminée $\varphi_{mi}$, une amplitude prédéterminée $A_{mi}$ et un retard prédéterminé $\tau_{mi}$.

La fréquence $F_i$, la phase ou le déphasage $\varphi_{mi}$, l'amplitude $A_{mi}$ et le retard $\tau_{mi}$ de chacun des signaux élémentaires sont réglables de façon indépendante.

Chaque générateur de forme d'onde $GFO_{mi}$ comprend un générateur primaire $GP_{mi}$ de signal sinusoïdal primaire de fréquence prédéterminée correspondant à la fréquence du signal élémentaire généré par le générateur de forme d'onde.

Avantageusement, le générateur G1 est configuré de sorte que les signaux sinusoïdaux primaires sont générés de façon de façon cohérente en phase. Autrement dit, ces signaux sinusoïdaux primaires sont générés à partir d'un signal commun afin de présenter une même référence en phase.

A cet effet, les générateurs de forme d'onde $GFO_{mi}$ reçoivent, par exemple, en entrée, un signal d'horloge H permettant de synchroniser les générateurs primaires GPmi de sorte qu'ils génèrent des signaux primaires en phase, c'est-à-dire qu'ils génèrent des signaux primaires cohérents en phase.

Chaque générateur de forme d'onde $GFO_{mi}$ comprend, par exemple, mais non nécessairement, un retardateur $R_{mi}$ recevant en entrée le signal sinusoïdal primaire et configuré pour appliquer un retard prédéterminé $\tau_{mi}$ au signal sinusoïdal primaire de façon à délivrer à sa sortie, un signal sinusoïdal retardé.

Chaque générateur de forme d'onde $GFO_{mi}$ comprend un déphaseur $DF_{mi}$ recevant, en entrée, le signal retardé, et configuré pour appliquer un déphasage $\varphi_{mi}$ prédéterminé au signal retardé de sorte à délivrer, à sa sortie, un signal sinusoïdal retardé déphasé.

Le générateur de forme d'onde $GFO_{mi}$ comprend, en outre, un régleur d'amplitude $RA_{mi}$, par exemple un amplificateur de puissance ou un atténuateur, recevant en entrée le signal sinusoïdal retardé déphasé et configuré pour appliquer un gain prédéterminé à ce signal, de façon à délivrer le signal élémentaire présentant l'amplitude $A_{mi}$.

Il est à noter que l'ordre dans lequel sont disposés le déphaseur, le retardateur et l'amplificateur de puissance en sortie du générateur primaire est indifférent.

Avantageusement, la fréquence, le retard, le déphasage et le gain sont réglables.

A cet effet, le générateur primaire, le retardateur, le déphaseur et le régleur d'amplitude sont commandables.

Le générateur G1 comprend un outre un contrôleur C configuré pour contrôler la fréquence, le retard, le déphasage et le gain de chacun des générateurs de forme d'onde GFO$_{mi}$ de façon indépendante. Le contrôleur C délivre, par exemple, des consignes de fréquence, retard, déphasage et gain appliquées respectivement par le générateur primaire, le retardateur, le déphaseur et l'amplificateur.

En variante, la fréquence et/ou le retard et/ou l'amplitude sont prédéterminés et non réglables.

Les retards sont utiles pour l'appairage des voies suite à une calibration.

En variante, les générateurs de forme d'onde GFO$_{mi}$ ne comprennent pas de retardateurs.

Il est à noter que le réglage des déphasages appliqués par les déphaseurs DF$_{mi}$ des générateurs de forme d'onde GFO$_{mi}$ configurés pour générer un signal élémentaire $\tau_{mi}$ à une même fréquence $F_i$ prédéterminée associés aux différents éléments rayonnants élémentaires E$_m$ permet de régler la direction du faisceau émis par l'antenne à cette fréquence.

En variante, chaque générateur de forme d'onde est un synthétiseur numérique direct élémentaire. La synthèse numérique directe est une technique, connue de l'homme du métier, de synthèse de fréquence qui consiste à élaborer en numérique les échantillons temporels d'un signal sinusoïdal que l'on veut générer et à convertir ces échantillons en analogique grâce à un convertisseur numérique-analogique CNA. Les échantillons temporels du signal sinusoïdal sont générés à différents instants d'échantillonnage espacés dans le temps. Un synthétiseur numérique direct élémentaire comprend, par exemple, un bloc de génération d'échantillons numériques du signal sinusoïdal à synthétiser La sortie de ce premier bloc est relié à l'entrée d'un bloc de conversion des échantillons numériques délivrés par ce premier bloc en un signal analogique. Le CNA est contenu dans ce deuxième bloc ou le constitue. La sortie du deuxième bloc est reliée à l'entrée d'un bloc de filtrage passe-bas qui permet, par exemple, d'éliminer les composantes spectrales liées à l'échantillonnage. Ce troisième bloc délivre le signal analogique de sortie du synthétiseur. Dans cette variante, les déphaseurs, retardateurs et régleurs d'amplitude ne sont plus nécessaires.

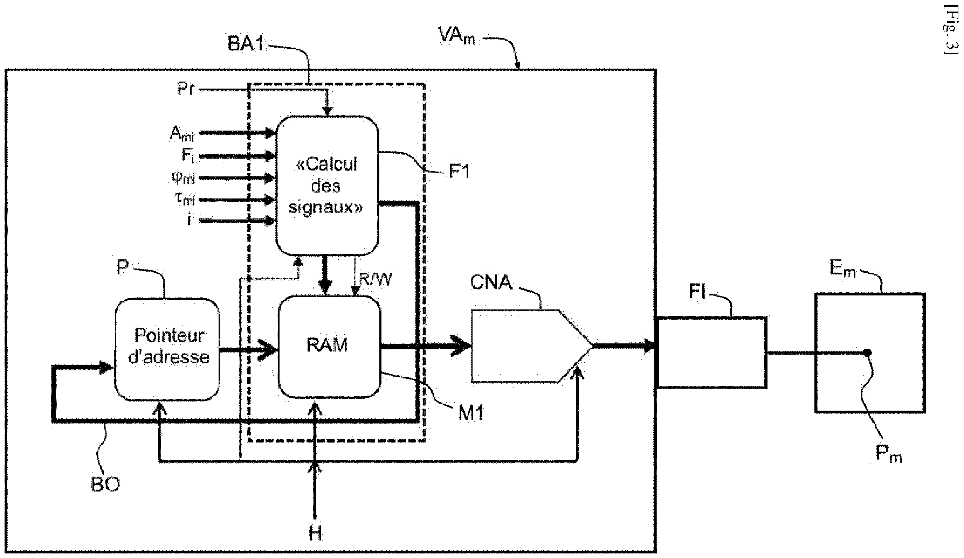

Sur la figure 3, on a représenté un autre exemple d'une voie VA$_m$ du générateur G1 couplée à un des éléments rayonnants E$_m$ au port d'excitation P$_m$.

Dans cet autre exemple non limitatif, les signaux élémentaires sont des signaux sinusoïdaux.

Dans ce mode de réalisation, la voie VA$_m$ comprend un synthétiseur numérique direct. Ce synthétiseur numérique direct est configuré pour générer le signal d'excitation $S_m(t)$.

Plus précisément ce synthétiseur numérique direct est configuré pour générer en numérique les échantillons temporels du signal d'excitation $S_m(t)$ et à convertir ces échantillons temporels en analogique grâce au convertisseur numérique-analogique.

Ainsi, la somme des signaux sinusoïdaux de fréquences différentes est réalisée de façon numérique. Cela permet de limiter les raies d'intermodulation par rapport au premier mode de réalisation de la figure 2 dans lequel la présence du sommateur entraîne la génération de raies d'intermodulation. Cela permet en conséquence d'utiliser cette antenne à plus forte puissance, pour des applications de détection à plus longue distance que le premier mode de réalisation qui convient, par exemple, lorsque les signaux émis sont de faible puissance, par exemple, pour des applications de détections de proximité.

A cet effet, la voie VA$_m$ comprend un bloc de calcul de signaux qui calcule et mémorise des échantillons temporels du signal d'excitation. Le bloc BA1 de calcul de signaux qui comprend une fonction de calcul de signaux F1 qui reçoit, en entrée, les différents paramètres des signaux élémentaires : (phases $\varphi_{mi}$, amplitudes $A_{mi}$, retards $\tau_{mi}$ et fréquences $F_i$) constituant le signal d'excitation $S_m(t)$.

Les valeurs $\varphi_{mi}$, $A_{mi}$, $\tau_{mi}$ et $F_i$ sont enregistrées dans un registre du bloc de calculs de signaux, à des adresses Ki du registre. Cette matrice de valeurs paramètre les calculs de forme d'onde qui sont fait pour tous les échantillons temporels. Cette phase de paramétrage est activée par la commande Pr.

La fonction de calcul de signaux F1 calcule et mémorise, dans une première mémoire vive M1, des échantillons temporels des signaux élémentaires à différents instants d'échantillonnages tech. Les différentes échantillons sont, par exemple, calculés aux différents instants d'échantillonnage tech définis par un signal d'horloge H reçu par le bloc de calcul de signaux BA1. La fréquence d'horloge est choisie pour respecter le critère de Shannon-Whittaker, c'est-à-dire, supérieure à deux fois la fréquence maximale des signaux sinusoïdaux élémentaires $f_N$.

La fonction de calcul calcule de nombre d'échantillons à calculer en considérant la valeur de fréquence la plus basse (ou la période la plus grande) du signal à générer par rapport à la période d'horloge.

Le bloc de calcul de signaux BA1 effectue ensuite, pour chaque instant d'échantillonnage tech, la somme des différents échantillons calculés à cet instant d'échantillonnage tech puis mémorise le résultat obtenu à une adresse de la mémoire M1 correspondant à cet instant d'échantillonnage tech. Cette somme est la valeur du signal d'excitation à l'instant d'échantillonnage $S_m(tech)$. La fonction F1 délivre donc les valeurs du signal d'excitation aux différents instants d'échantillonnage tech $S_m(tech)$.

Un pointeur d'adresse P commande la lecture de la mémoire M1, à la fréquence d'horloge, de sorte que la mémoire M1 délivre, en entrée d'un convertisseur numérique CNA, consécutivement, à la fréquence du signal d'horloge H, les sommes mémorisées aux instants d'échantillons consécutifs.

Le convertisseur numérique analogique CNA. Le signal délivré en sortie du convertisseur CNA est filtré par un ensemble d'au moins un filtre FI de sorte qu'en sortie du filtre FI, le signal d'excitation $S_m(t)$ est délivré.

La fonction de calcul de signaux F1 initialise le pointeur d'adresse à une adresse prédéterminée de la mémoire M1 par la boucle BO.

Le paramétrage et les calculs des valeurs discrètes de $S_m(tech)$.sont faites tant que la commande Pr est active. Le bloc BA1 est en mode calcul. Lorsque la commande Pr est relâchée, le bloc BA1 passe en mode lecture des valeurs discrètes du signal d'excitation $S_m(tech)$. Dans ce mode de fonctionnement, la fonction de calcul des signaux F1 et le pointeur d'adresses P génèrent les adresses successives permettant de lire les valeurs de $S_m(tech)$ dans la deuxième mémoire M2 qui délivre alors les valeurs consécutives $S_m(tech)$ aux instants d'échantillonnages consécutifs.

Il est à noter qu'à chaque fois que l'on souhaite modifier la direction de pointage d'un des faisceaux émis, on doit modifier les phases des signaux élémentaires participant à la génération du faisceau (c'est-à-dire ayant la phase du faisceau) et associés aux différents éléments rayonnant. Autrement dit, pour chaque élément rayonnant, on doit modifier la phase du signal élémentaire participant à la génération du faisceau et donc recalculer, pour chacune des voies, les valeurs des signaux élémentaires aux différents instants d'échantillonnage et donc les valeurs du signal d'excitation $S_m(tech)$ aux différents instants d'échantillonnage.

Les valeurs, des différentes phases, amplitudes et retards, sont par exemple, transmis aux différentes voies, par un contrôleur de pointage C représenté sur la figure 2.

L'invention se rapporte également à un procédé de génération de N faisceaux simultanés en émission.

Le procédé comprend l'étape suivante : exciter chacun des M éléments rayonnants Em du réseau R de l'antenne en les M ports d'excitation par M signaux d'excitation respectifs, chacun des M signaux d'excitation étant la somme de N signaux élémentaires de porteuses respectives ayant des fréquences respectives distinctes, N étant un entier supérieur à 1, présentant chacun une phase réglable de façon que l'antenne réseau rayonne simultanément les N faisceaux aux fréquences respectives.

Selon un premier mode de réalisation, cette étape d'excitation comprend une étape consistant à générer un des M signaux d'excitation, ladite étape comprenant les étapes suivantes :

- générer les N signaux élémentaires,

- faire la somme des N signaux sinusoïdaux élémentaires de façon à obtenir le signal d'excitation.

Cette étape peut être mise en œuvre pour chacun des M signaux d'excitation ou pour au moins un des M signaux d'excitation.

Selon un deuxième mode de réalisation, ce procédé comprend l'étape suivante : générer des échantillons du signal d'excitation par synthèse numérique directe.

Le procédé comprend avantageusement une étape consistant à convertir les échantillons en un signal analogique.

**Revendications**

1. Antenne réseau (A) comprenant un réseau d'éléments rayonnants (Em) composé de M éléments rayonnants, M étant un entier supérieur à 1, comprenant chacun un port d'excitation (Pm), l'antenne réseau (A) comprenant un générateur (G1) configuré et couplé aux M ports d'excitation de façon à permettre d'exciter simultanément les éléments rayonnants (Em) en les M ports d'excitation (Pm) par M signaux d'excitation respectifs, chacun des M signaux d'excitation étant la somme de N signaux élémentaires de porteuses respectives sinusoïdales de fréquences respectives distinctes, N étant un entier supérieur à 1, présentant chacun une phase, une fréquence, une amplitude et un retard réglables, de façon que l'antenne réseau (A) rayonne simultanément N faisceaux aux fréquences respectives.

2. Antenne réseau (A) selon la revendication 1, comprenant une voie comprenant N générateurs de forme d'onde, chaque générateur de forme d'onde étant configuré pour générer un des N signaux élémentaires composant le signal d'excitation, le générateur individuel à sommateur comprenant un sommateur configuré pour faire la somme des N signaux élémentaires délivrés par les générateurs de formes d'onde de sorte à délivrer le signal d'excitation.

3. Antenne réseau (A) selon la revendication 2, dans laquelle les générateurs de formes d'ondes comprennent des amplificateurs et des déphaseurs.

4. Antenne réseau (A) selon la revendication 2, dans laquelle les générateurs de formes d'ondes comprennent des synthétiseurs numériques direct élémentaires, chaque synthétiseur numérique direct élémentaire étant configuré pour générer des échantillons d'un des N signaux élémentaires composant le signal d'excitation.

5. Antenne réseau (A) selon l'une quelconque des revendications 2 à 4, comprenant M voies comprenant chacune N générateurs de forme d'onde, les M voies étant couplées aux M ports d'excitation respectifs de façon à permettre d'exciter le M port d'excitation par les M signaux d'excitation respectifs.

6. Antenne réseau (A) selon la revendication 1, comprenant un synthétiseur numérique direct configuré pour générer des échantillons du signal d'excitation.

7. Procédé de génération de N faisceaux à N fréquences respectives distinctes à partir d'une antenne réseau (A) comprenant un réseau comprenant M éléments rayonnants (Em), M étant un entier supérieur à 1, le procédé comprenant l'étape suivante:

   - exciter les M éléments rayonnants en les M ports d'excitation par M signaux d'excitation respectifs, chacun des M signaux d'excitation étant la somme de N signaux élémentaires ayant des porteuses respectives de fréquences respectives distinctes, N étant un entier supérieur à 1, présentant chacun une phase, une fréquence, une amplitude et un retard réglables de façon que l'antenne réseau (A) rayonne simultanément les N faisceaux aux fréquences respectives.

8. Procédé selon la revendication précédente, comprenant l'étape suivante :

   - générer un des M signaux d'excitation, ladite étape comprenant les étapes suivantes :

     - générer les N signaux élémentaires,
     - faire la somme des N signaux élémentaires de façon à obtenir le signal d'excitation.

9. Procédé selon la revendication 7, comprenant l'étape suivante : générer un des M signaux d'excitation, ladite étape comprenant l'étape suivante :

   - générer des échantillons du signal d'excitation par synthèse numérique directe.

[Fig. 1]

[Fig. 2]

[Fig. 3]

Europäisches Patentamt

European Patent Office

Office européen des brevets

# RAPPORT DE RECHERCHE EUROPEENNE

Numéro de la demande

**EP 22 18 7326**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 98/32188 A2 (AIL SYSTEMS INC [US]) 23 juillet 1998 (1998-07-23) <br> * page 8 – page 16 * <br> * revendications 1-13 * <br> * figures 8-13 * <br> ----- | 1-9 | INV. <br> H04B7/06 <br> H04B7/0408 <br> H04B1/04 <br> H01Q23/00 <br> H01Q3/34 |
| A | US 2003/095068 A1 (PURDY DANIEL S [US] ET AL) 22 mai 2003 (2003-05-22) <br> * alinéa [0020] – alinéa [0042] * <br> * figures 1-4 * <br> ----- | 1-9 | |

**DOMAINES TECHNIQUES RECHERCHES (IPC)**

H04B
H01Q

Le présent rapport a été établi pour toutes les revendications

| Lieu de la recherche | Date d'achèvement de la recherche | Examinateur |
|---|---|---|
| Munich | 14 décembre 2022 | Kokkinos, Titos |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 4 125 227 A1**

## ANNEXE AU RAPPORT DE RECHERCHE EUROPEENNE
## RELATIF A LA DEMANDE DE BREVET EUROPEEN NO.

**EP 22 18 7326**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**14-12-2022**

| Document brevet cité au rapport de recherche | | Date de publication | Membre(s) de la famille de brevet(s) | | Date de publication |
|---|---|---|---|---|---|
| WO 9832188 | A2 | 23-07-1998 | EP 0904610 | A2 | 31-03-1999 |
| | | | JP 2001502152 | A | 13-02-2001 |
| | | | US 5764187 | A | 09-06-1998 |
| | | | US 5943010 | A | 24-08-1999 |
| | | | WO 9832188 | A2 | 23-07-1998 |
| US 2003095068 | A1 | 22-05-2003 | AUCUN | | |

EPO FORM P0460

Pour tout renseignement concernant cette annexe : voir Journal Officiel de l'Office européen des brevets, No.12/82